# EUROPEAN PATENT APPLICATION

(11) **EP 1 967 449 A2**
(43) Date of publication of application: **10.09.2008**
(21) Application number: 08101971.3
(22) Date of filing: 25.02.2008
(51) Int. Cl.: B64D 13/00, B64D 33/02

(54) **Systems and methods for reducing pressure loss of air flowing froma first area to a second area**

(30) Priority: 26.02.2007 US 678899
(71) Applicant: Honeywell International Inc., Morristown, NJ 07962 (US)
(72) Inventor: Anderson, Morris G., Mesa, AZ 85203 (US); Sheoran, Yogendra Y., Scottsdale, AZ 85260 (US)
(74) Representative: Buckley, Guy Julian

(57) **Abstract**

Systems and methods arc provided for reducing pressure loss of air flowing from a first area (102) in a first direction (126) to a second area (104) in a second direction (128). The systems include a flow surface (106), first and second fence walls (112, 114), an opening (108), and a flow path (110). The flow surface (106) defines a portion of the first area (102). The fence walls (112, 114) extend substantially parallel to each other along the flow surface in the first direction (126). The opening (108) is formed in the flow surface (106) and is disposed between the first and second fence walls (112, 114). The flow path (110) defines at least a portion of the second area (104 and is in flow communication with the opening (108) to receive a portion of the airflow and to direct the airflow in the second direction (128). Methods of using and manufacturing the systems are also provided.

## Description

### TECHNICAL FIELD

The inventive subject matter relates to air inlet systems, and more particularly, to systems and methods for reducing pressure loss of air flowing from a first area of the system to a second area of the system.

### BACKGROUND

Air may be ingested into an aircraft and used by certain aircraft components. In one example, air is drawn into an aircraft engine, and a majority of the air is passed through a compressor section into a combustor section where it is used to bum fuel for producing power. A portion of the air may be diverted from one of the engine sections into a duct and may be used to supply components other than the engine. In another example, air flowing along an outer surface of the aircraft may be diverted into a duct toward an auxiliary power unit. The auxiliary power unit burns fuel with the air to produce electrical power and compressed air for various parts of the aircraft.

Although diverting air into a duct has been a useful way for supplying the air to certain aircraft components, it may have drawbacks. In particular, when the air flows from a first area (e.g., the aircraft section or aircraft surface) into a second area (e.g., the duct), its flow may change from a first direction to a second direction. The air may experience a pressure drop and thus, may not be sufficiently pressurized when it reaches the component. Consequently, energy may be expended to increase the pressure of the air, either when the air is in the second area or when the air reaches the component.

To increase energy efficiency, it is desirable to have air inlet systems and methods that may reduce pressure loss of air flowing from one area to another area. It is also desirable for the systems and methods to be simple and relatively inexpensive to implement. It is also desirable to reduce pressure loss in the second area without incurring undesirable drag to the aircraft or pressure loss to the airflow in the first area that is not diverted. Moreover, it is desirable for the systems and methods to be capable of being retrofitted into existing aircraft.

### BRIEF SUMMARY

The inventive subject matter provides systems and methods for reducing pressure loss of air flowing from a first area in a first direction to a second area in a second direction.

In one embodiment, and by way of example only, a system is provided that includes a flow surface, first and second fence walls, an opening, and a flow path. The flow surface defines a portion of the first area. The fence walls extend substantially parallel to each other and each having sidewalls that are substantially perpendicular to the flow surface and aligned in the first direction. The opening is formed in the flow surface and is disposed between the first and second fence walls. The flow path is below the flow surface, defines at least a portion of the second area, and is in flow communication with the opening to receive a portion of the airflow and to direct the airflow in the second direction.

In another embodiment, by way of example only, a method is provided for reducing pressure loss of air flowing from a first area to a second area. The method includes the steps of directing air through the first area in a first direction along a flow surface, the air having a first pressure, flowing the air between first and second fence walls that extend substantially parallel to each other along the flow surface in the first direction, and diverting a portion of the air into an opening formed in the flow surface between the first and second fence walls to thereby flow the diverted portion in a second direction along a flow path at a second pressure.

In still another embodiment, by way of example only, a method is provided for manufacturing a system for reducing pressure loss of air flowing from a first area to a second area. The method includes attaching a first fence wall and a second fence wall to an aircraft surface around an opening formed therein such that the first fence wall and the second fence walls are substantially parallel to each other and extend in a predetermined direction.

Other independent features and advantages of the preferred system and methods will become apparent from the following detailed description, taken in conjunction with the accompanying drawings which illustrate, by way of example, the principles of the inventive subject matter.

### BRIEF DESCRIPTION OF THE DRAWINGS

FIG. 1 is a perspective view of a system that may reduce the pressure loss of air flowing from a first area to a second area, according to an embodiment;

FIG. 2 is a cross-sectional view of the system shown in FIG. 1 along line 2-2, according to an embodiment;

FIG. 3 is a cross-sectional view of the system shown in FIG. 1 along line 3-3, according to an embodiment;

FIG. 4 is a simplified, cutaway view of a portion of an aircraft including a system that may reduce the pressure loss of air flowing from a first area to a second area, according to an embodiment;

FIG. 5 is a simplified, cutaway view of a portion of an aircraft including a system that may reduce the pressure loss of air flowing from a first area to a second area, according to another embodiment; and

FIG. 6 is a cross-sectional view of the aircraft portion depicted in FIG. 5 taken along line 6-6.

### DETAILED DESCRIPTION OF A PREFERRED EMBODIMENT

The following detailed description of the inventive subject matter is merely exemplary in nature and is not intended to limit the inventive subject matter or the application and uses of the inventive subject matter. Furthermore, there is no intention to be bound by any theory presented in the preceding background or the following detailed description.

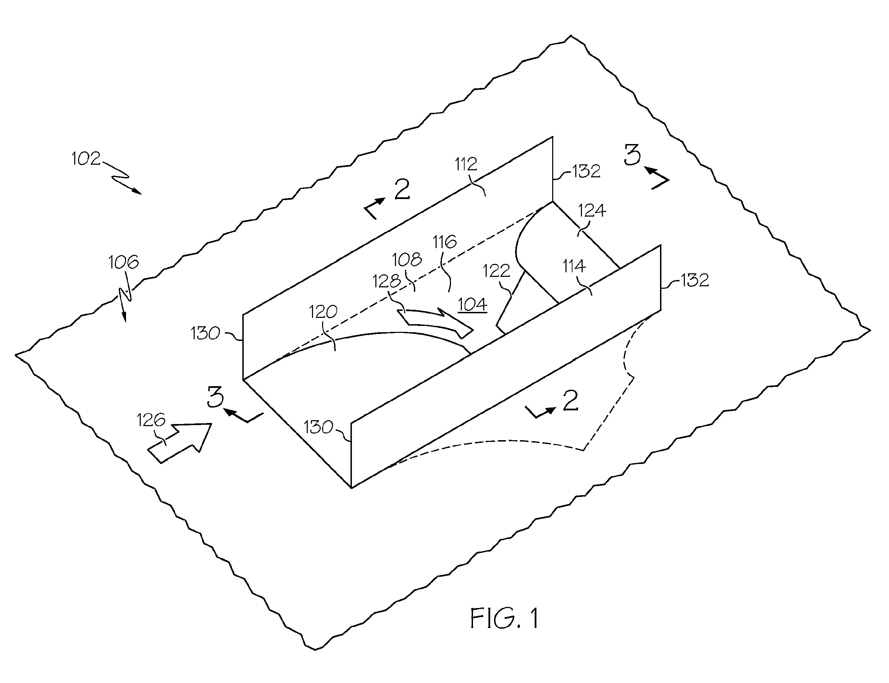

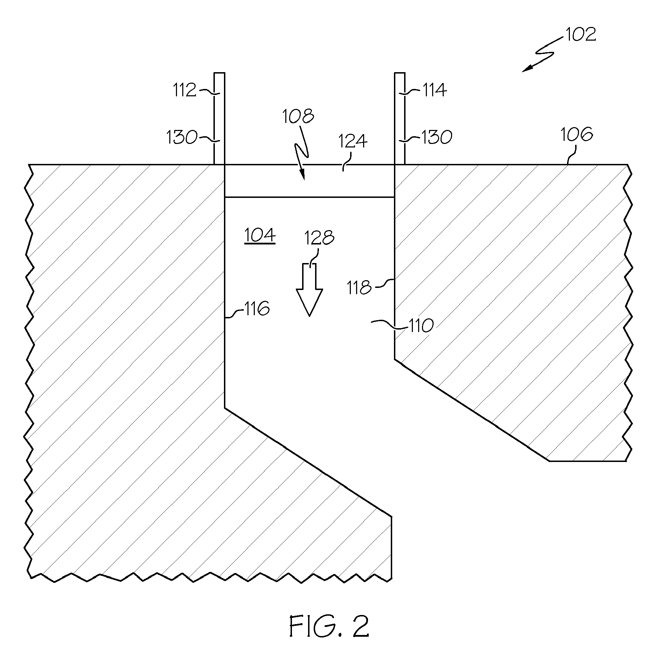

Turning now to FIGs. 1 and 2, a perspective and a cross-sectional view, respectively, of a system 100 is provided that may reduce pressure loss of air flowing from a first area 102 to a second area 104, according to an embodiment. The system 100 includes a flow surface 106, an opening 108, a flow path 110, and a pair of fence walls 112, 114. The flow surface 106 defines at least a portion of the first area 102 and may be curved or flat. The opening 108 is formed in the flow surface 106 between the two fence walls 112, 114. In an embodiment, the opening 108 provides entry into the flow path 110.

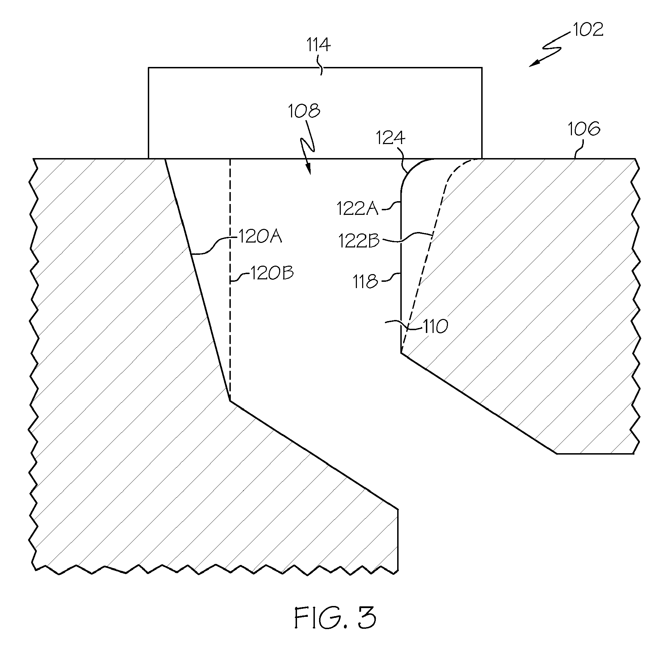

The flow path 110 is below the flow surface 106, defines a portion of the second area 104, and may be configured to direct air flow to an aircraft component (not shown). In an embodiment, a portion of the flow path 110 adjacent the opening 108 may include one or more sidewalls. For example, in an embodiment in which the flow path 110 has a rectangular cross-sectional flow area, the flow path 110 may include two sidewalls 116, 118, a forward wall 120, and an aft wall 122. The sidewalls 116, 118 may be substantially parallel to each other, as depicted in FIGs. 1 and 2, or non-parallel to each other. Similarly, the forward and aft walls 120, 122 may be parallel or non-parallel to each other as well. In an embodiment, the forward wall 120 may not be parallel to the aft wall 122 in order to encourage air to flow toward the flow path 110. For example, the aft wall 122 may be substantially perpendicular (e.g., 90°±5°) to the flow surface 106, and the forward wall 120a may slope toward the aft wall 122a, as shown in FIG. 3. Alternatively, the forward wall 120b (shown in phantom) may be substantially perpendicular to the flow surface 106, while the aft wall 122b (shown in phantom) slopes toward the forward wall 120. In still another example, both the forward wall 120 and aft wall 122 may slope toward each other, as shown in FIGs. 1 and 2.

The aft wall 122 may include a curved lip 124 formed thereon to further encourage air to flow toward the flow path 110. The curved lip 124 may cause a portion of the air flowing through the first area 102 to impinge thereupon. This embodiment may be useful when air travels over the flow surface 106 toward the flow path 110 from multiple directions. In an embodiment, the lip 124 may be formed where the aft wall 122 meets the flow surface 106. In another embodiment, the lip 124 may be disposed substantially within the flow path 110. For example, the lip 124 may extend toward a center of the flow path 110.

The fence walls 112, 114 are included to reduce pressure loss of the air that flows from the first area 102 in a first direction 126 into the flow path 110 in a second direction 128. In an embodiment, the first direction 126 may be a direction in which a majority of the air will flow during aircraft operation. In another embodiment, the first direction 126 may be a direction along which the aircraft may travel during taxi or flight. The second direction 128 may be a direction in which a majority of the air will flow when traveling through the flow path 110.

The fence walls 112, 114 may have sidewalls that are substantially perpendicular to the flow surface 106 and that are disposed around the surface opening 108 aligned substantially parallel to the first direction 126. The fence walls 112, 114 may be relatively thin sheets of material that extend from the flow surface 106. In an embodiment, the fence walls 112, 114 are configured to maintain structural integrity when exposed to the airflow. Suitable materials include, but are not limited to, aluminum alloys, steel, and composites.

To minimize air flow disruption, the fence walls 112, 114 are aligned substantially parallel to each other. The fence walls 112, 114 may be substantially aligned and/or flush with the flow path sidewalls 116, 118, as shown in FIG. 1. In another embodiment, the fence walls 112, 114 may be spaced a predetermined distance from the opening 108.

Each fence wall 112, 114 has an inner surface along which the air flows that has an area sufficient to support the pressure gradient caused by air flowing from the first area 102 to the second area 104. Thus, if the fence walls 112, 114 each have a sufficient surface area, they may be any one of numerous shapes. In one example, the fence walls 112, 114 may be rectangular.

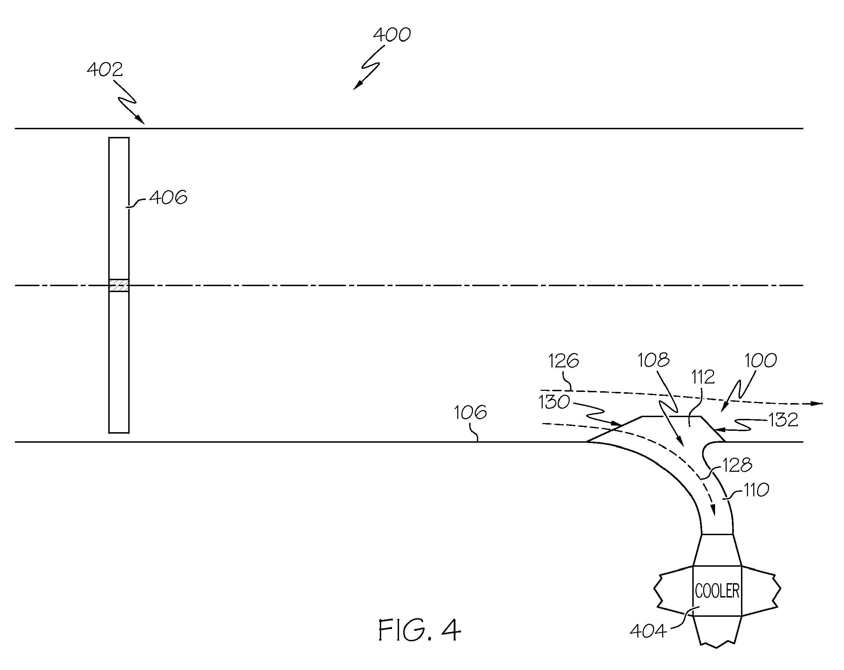

In another example, the fence walls 112, 114 may additionally have enhanced aerodynamic characteristics so that the flow of the air passing around the fence walls 112, 114 is not substantially disrupted. In an embodiment shown in a cutaway view in FIG. 4, the fence walls 112, 114 (only one of which is shown in FIG. 4) may be incorporated into an aircraft turbine engine 400 and may be trapezoidal. The trapezoidal fence walls 112, 114 may be used to reduce pressure loss when air flows between an air intake section 402 and a cooler 404.

In this embodiment, the cooler 404 may be in communication with the air intake section 402 via the flow path 110, which may be a duct. The air intake section 402 may include a fan 406 disposed proximate the flow surface 106 and upstream of the opening 108. The fan 406 may draw air into the aircraft turbine engine 400 in the first direction 126 so that at least a portion of the air flows over the flow surface 106 and between the fence walls 112, 114. Because the fence walls 112, 114 have angled forward and aft ends 130, 132 the flow of air traveling around the fence walls 112, 114 may be minimally disrupted. Additionally, when the air enters the duct and changes direction from the first direction 126 to the second direction 128, pressure loss of the air traveling from a point forward the fence walls 112, 114 to a point in the duct is minimized.

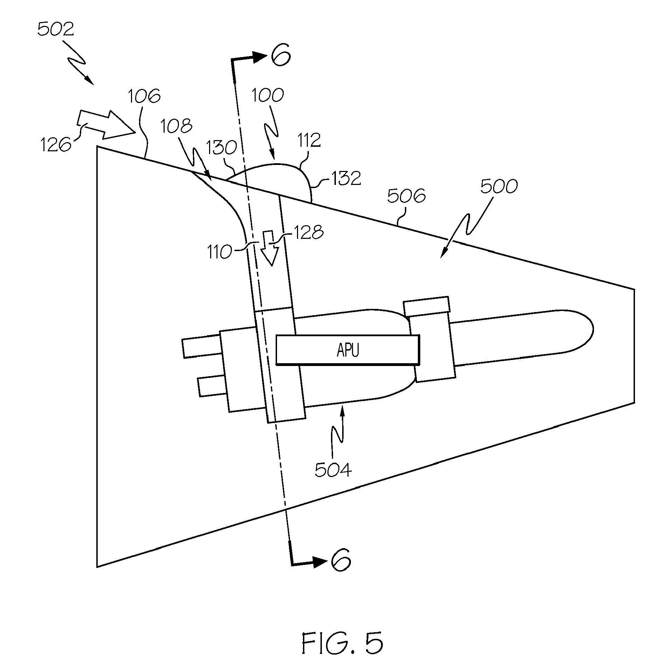

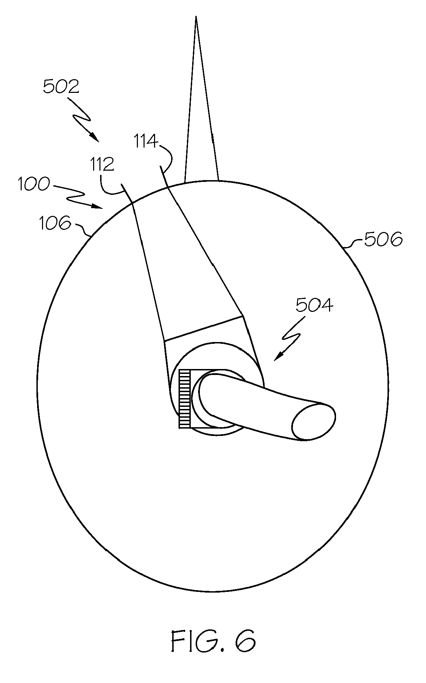

In another embodiment shown in cutaway views in FIGs. 5 and 6, the fence walls 112, 114 may be incorporated into an auxiliary power unit ("APU") system 500 and may have rounded forward and/or aft ends 130, 132. In this embodiment, the rounded fence walls 112, 114 may be used to reduce pressure loss when air flows between an ambient environment 502 and APU 504. The ambient environment 502 may be an environment around an aircraft 506 when the aircraft 506 is in flight or taxiing on the ground. The flow surface 106 may define a portion of an outer skin of an aircraft 506, while the opening 108 in the flow surface 106 may be in flow communication with the APU 504 via the flow path 110 (e.g., a duct).

During aircraft operation, such as during flight or on the ground, ambient air travels over the flow surface 106 in substantially a first direction 126. Because the fence walls 112, 114 have rounded forward and aft ends 130, 132 the flow of air traveling around the fence walls 112, 114 may be minimally disrupted. Additionally, when the air enters the duct and changes direction from the first direction 126 to the second direction 128, pressure loss of the air traveling from a point forward the fence walls 112, 114 to a point in the duct is minimized.

In either case, the systems 400, 500 may be manufactured by attaching the first and second fence walls 112, 114 to the flow surface 106 (e.g., the air intake section surface, the outer skin of the aircraft, or other aircraft surface) such that the fence walls 112, 114 are disposed around the opening 108 formed in the surface 106 and the fence walls are substantially parallel to each other and extend in a predetermined direction (e.g., the first direction 126). In an embodiment, the opening 108 communicates with the flow path 110, which may define a duct), and the flow path has a first side wall and a second side wall opposite the first side wall. The first and second fence walls 112, 114 may be attached substantially flush with the first and second side walls, respectively. Alternatively, the first and second fence walls 112, 114 may be attached a predetermined distance apart from the first side wall and the second side wall, respectively. In another embodiment, the flow path 110 has a wall, and a lip, which extends at least partially into the flow path 110, may be attached to the wall.

Computational Fluid Dynamic ("CFD") analyses have been performed showing that the system 100 reduces pressure loss when air flows from a first area 102 to a second area 104. In one study, a CFD pressure solution was obtained for the system 100 including the two trapezoidal fence walls 112, 114 extending from the flow surface 106 and disposed around the opening 108 formed therein ("inventive system") in flow communication with a duct. A CFD pressure solution was also obtained for a system that did not include the fence walls and that included an opening formed in a surface that was in flow communication with a duct ("conventional system"). For each system, pressure was calculated at a first point forward of the opening and at a second point in the duct. The inventive system had a calculated pressure of 13.948 psi at the first point and 13.284 psi at the second point, while the conventional system had pressure of 13.948 psi at the first point and 13.123 psi at the second point at the same equivalent corrected inlet flow rate. Thus, the inventive system reduced pressure loss by 20% as compared to the conventional system.

Air inlet systems and methods have now been provided that may reduce pressure loss of air flowing from one area to another area. The systems and methods may be simple and relatively inexpensive to implement. Additionally, the systems and methods may be capable of being retrofitted into existing aircraft.

While the inventive subject matter has been described with reference to a preferred embodiment, it will be understood by those skilled in the art that various changes may be made and equivalents may be substituted for elements thereof without departing from the scope of the inventive subject matter. In addition, many modifications may be made to adapt to a particular situation or material to the teachings of the inventive subject matter without departing from the essential scope thereof. Therefore, it is intended that the inventive subject matter not be limited to the particular embodiment disclosed as the best mode contemplated for carrying out this inventive subject matter, but that the inventive subject matter will include all embodiments falling within the scope of the appended claims.

## Claims

1. A system (100) for reducing pressure loss of air flowing from a first area (102) in a first direction (126) to a second area (104) in a second direction (128), the system comprising:
a flow surface (106) defining a portion of the first area (102);
a first fence wall (112) and a second fence wall (114) extending substantially parallel to each other and each having sidewalls that are substantially perpendicular to the flow surface (106) and aligned in the first direction (126);
an opening (108) formed in the flow surface (106), the opening (108) disposed between the first and second fence walls (112, 114); and
a flow path (110) below the flow surface (106), the flow path (110) defining at least a portion of the second area (104) and in flow communication with the opening (108) to receive a portion of the airflow and to direct the airflow in the second direction (128).

2. The system of claim 1, wherein:
the system further comprises an aircraft outer surface; and
the flow surface (106) comprises a portion of the aircraft outer surface.

3. The system of claim 2, further comprising an auxiliary power unit (500) in flow communication with the flow path (110).

4. The system of claim 1, wherein:
the system further comprises an air intake section of an aircraft; and
the flow surface comprises a portion of the air intake section.

5. The system of claim 4, further comprising a cooler (404) in flow communication with the flow path (110).

6. The system of claim 1, wherein at least one of the first and second fence walls (112, 114) has a forward end (130) that is not perpendicular to the surface.

7. The system of claim 1, wherein at least one of the first and second fence walls (112, 114) has an aft end (132) that is not perpendicular to the surface.

8. The system of claim 1, further comprising a rounded lip (124) disposed at least partially within the flow path (110).

9. The system of claim 1, wherein:
the flow path (110) defines a duct having a first side wall (120) and a second side wall (122) opposite the first side wall (120); and
the first and second fence walls (112, 114) are disposed substantially flush with the first side wall (120) and the second side wall (122), respectively.

10. The system of claim 1, wherein the first and second fence walls (112, 114) are spaced a predetermined distance apart from the opening (108).
